(19) **Europäisches Patentamt**

**European Patent Office**

**Office européen des brevets**

(11) Publication number : **0 237 065 B1**

(12) **EUROPEAN PATENT SPECIFICATION**

(45) Date of publication of patent specification :
02.01.91 Bulletin 91/01

(51) Int. Cl.⁵ : **F02B 23/04**

(21) Application number : 87103568.9

(22) Date of filing : 12.03.87

(54) Combustion chamber for internal combustion engines.

(30) Priority : 14.03.86 JP 55090/86

(43) Date of publication of application :
16.09.87 Bulletin 87/38

(45) Publication of the grant of the patent :
02.01.91 Bulletin 91/01

(84) Designated Contracting States :
DE FR GB

(56) References cited :
DE-A- 1 907 391
DE-C- 674 748
FR-A- 1 076 741
GB-A- 521 341
GB-A- 802 118
PATENT ABSTRACTS OF JAPAN, vol. 9, no.
290 (M-340)[2013], 16th November 1985; &
JP-A-60 128 927 (NISSAN JIDOSHA K.K.)
10-07-1985

(56) References cited :
PATENT ABSTRACTS OF JAPAN, VOL. 8, NO.
195 (M-323)[1632], 7TH SEPTEMBER 1984; &
JP-A-59 85 424 (TOYOTA JIDOSHA K.K.)
17-05-1984

(73) Proprietor : Isuzu Motors Limited
10-go, 22-ban, 6-chome, Minami-Ohi
Shinagawa-ku
Tokyo (JP)

(72) Inventor : Yanagisawa, Naoki c/o Fujisawa
Factory
Isuzu Motors Limited 8, Tsuchidana
Fujisawa-shi Kanagawa (JP)
Inventor : Sato, Yoshihiko c/o Fujisawa
Factory
Isuzu Motors Limited 8, Tsuchidana
Fujisawa-shi Kanagawa (JP)

(74) Representative : Schaumburg, Thoenes &
Englaender
Mauerkircherstrasse 31 Postfach 86 07 48
D-8000 München 86 (DE)

## Description

The present invention relates to a combustion chamber and cylinder head arrangement for an internal combustion engine as mentioned in the preamble of claim 1.

Among combustion chambers of internal combustion engines which are designed to achieve a high efficiency combustion by directly injecting the fuel, there is a method known as the MAN-M method. In the MAN-M method, a main combustion chamber is formed in the piston top by making a deep spherical recess. While generating a swirl therein, the fuel mist injected from the fuel injection nozzle is allowed to adhere onto the inner walls of the main combustion chamber in the form of a liquid fuel film and the surface evaporation rate of this fuel film is controlled by the swirl.

However, the MAN-M method has the problem of generating a large amount of HC and bluish white smoke when starting-up at low temperature, e.g. when the environmental air temperature and the engine cooling water temperature are both low, or during idling when the temperature of the combustion chamber wall is not yet sufficiently raised. This happens in such cases as mentioned above because the amount of fuel vaporized for the combustion diminishes and at the same time, the air-fuel mixture (called 'mixture' hereinafter) becomes very lean. Since the small quantity of the vaporized fuel is revolved around, being carried by the swirl, dispersion of the mixture is assisted in the combustion chamber as a whole.

As solutions to the above drawbacks, internal combustion engines described in the specifications of japanese Patent Lay Open Print No. 85519/81 (called 'Proposal No. 1' hereinafter), Japanese Utility Model Lay Open Print No. 115525/81 (called 'Proposal No. 2' hereinafter), Japanese Utility Model Lay Open Print No. 172125/82 (called 'Proposal No. 3' hereinafter) and Japanese Utility Model Lay Open Print No. 33221/82 (called 'Proposal No. 4' hereinafter) have been proposed.

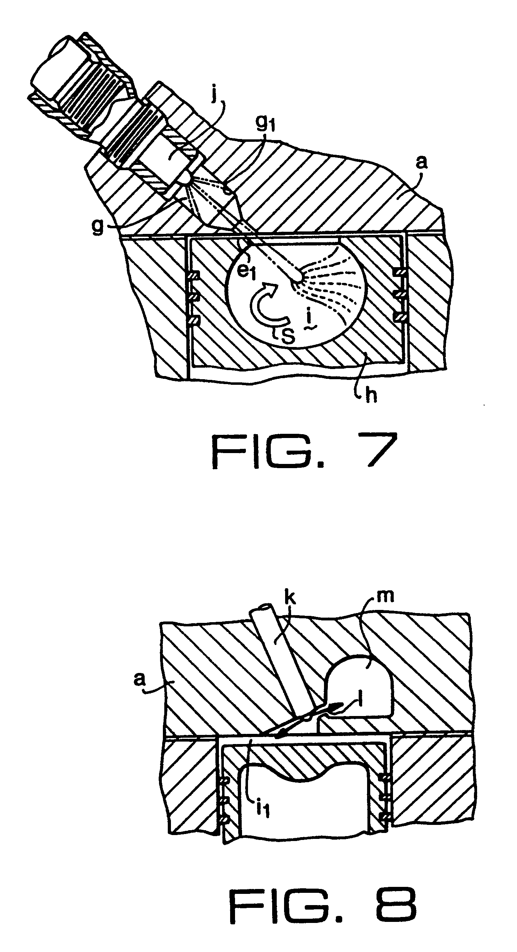

In Proposal No. 1, as shown in Fig. 7, there is provided an ignition chamber g in the cylinder head a, and a main combustion chamber i in the piston h, the two being in communication with each other by a passage $e_1$, and a fuel injection nozzle j being disposed in an upper part of the said ignition chamber g at the inner wall $g_1$ thereof. From said fuel injection nozzle, fuel is injected toward the inner wall $g_1$ of said ignition chamber g and said main combustion chamber i through said passage $e_1$.

In Proposal No. 2, as shown in Fig. 8, the arragnement provides a fuel injection nozzle k on the side of the main combustion chamber $i_1$ in such a way that, on the one hand, most of the fuel injected from the fuel injection nozzle k is sprayed into the subcombustion chamber m through the hole 1, and on the other hand, that the cross section area of the injection passage that connects the subcombustion chamber m with the main combustion chamber $i_1$ is enlarged.

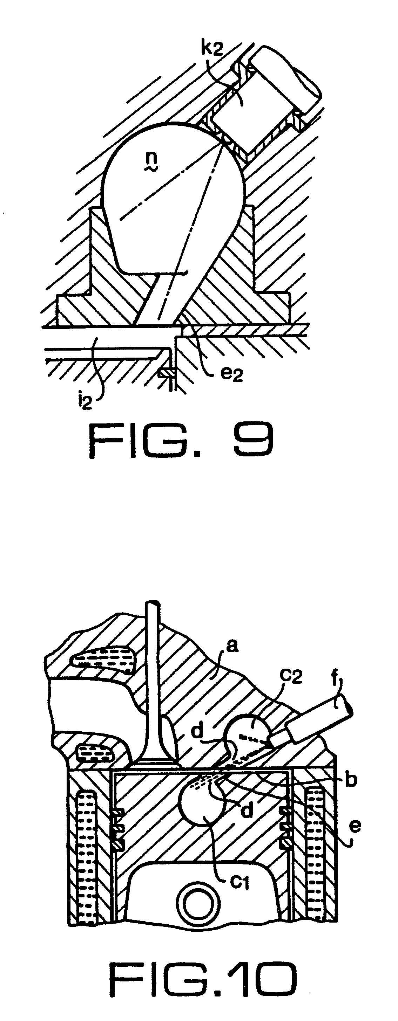

In Proposal No. 3, as shown in Fig. 9, the arrangement discloses a fuel injection nozzle $k_2$ in an upper part of the swirl chamber n, which communicates with the main combustion chamber $i_2$ by the passage $e_2$ in such a way that the fuel is supplied not only to the swirl chamber n but also to the main combustion chamber $i_2$.

In Proposal No. 4, as shown in Fig. 10, the arrangement provides a pair of swirl chamber $c_1$ and $c_2$ in the cylinder head a and in the piston top b, respectively, with their respective air intakes d facing each other over a connecting hole e in such a way that a part of the fuel mist, injected by the fuel injection nozzle f, is injected into the swirl chamber $c_1$ in the piston top b through the connecting hole e, while the rest is being injected into the swirl chamber $c_2$ in the cylinder head a.

In all of the proposals mentioned above, attempts are made to improve combustion efficiency by optimizing the air-fuel ratio, i.e. the ratio between the air that is heated to a high temperature by the compression action of the piston and the injected fuel. However, to supply the fuel to the main combustion chamber i, $i_2$ through the connecting passage $e_1$, $e_2$, as in Proposal No. 1 (Fig. 7) or in Proposal No. 3 (Fig. 9), means that the penetration power of the fuel mist, introduced originally on injection, is reduced by the flow of air generated in the compression stroke. Therefore, difficulties arise in such a process where fuel is supplied, vaporized and combusted in the main combustion chamber i, $i_2$.

Also, in Proposals Nos. 1 and 3, the chamber that generates and utilizes the swirl is limited to one side only. Therefore, these proposals do not improve vaporization and combustion by optimizing the air-fuel ratio and the improvements with respect to fuel consumption and output are unsatisfactory.

In Proposal No. 4, on the other hand, the construction providing the swirl chambers $c_1$ and $c_2$ facing each other by the connection hole e simply doubles the throttling loss of the combustion air forced thereinto, thereby increasing the thermal loss in the flow of the burnt gas into the piston top b and leading to higher fuel consumption.

Also, to inject fuel into the swirl chamber $c_1$ in the piston top b through the connection hole e is counterproductive with respect to improving the diffusion of fuel mist – it is a property of the injected fuel mist to disperse conically with respect to the direction of injection – resulting in reduction of penetration. Furthermore, there is a possibility that the fuel which is injected toward the swirl chamber $c_1$ in the piston top b could be burned in the connecting hole e by the combustion energy generated inside the swirl chamber 2 in the cylinder head a. Therefore, Proposal No. 4 leaves much to be desired with regard to improvement of fuel consumption and output.

A combustion chamber and cylinder head arrangement as mentioned in the preamble of claim 1 is known from GB-A-802,118. In this combustion chamber and cylinder head arrangement the injector part of the nozzle is located in the passage connecting the main combustion chamber with the ignition chamber at a position close to the ignition chamber. Since the fuel is sprayed during the compression stroke of the piston and a strong compressed air comes from the main chamber into the ignition chamber, the fuel sprayed towards the main chamber is weakened when it enters the main chamber. The weakened fuel does not fully reach the main chamber wall so that the fuel in the main chamber can only partially receive the heat from the main chamber wall. Furthermore, in said known arrangement, the fuel stream through the passage towards the main combustion chamber is restrained due to the dimension and inclination of said passage.

It is an object of the present invention to provide a combustion chamber for an internal combustion engine capable of reducing the unburnt matters such as HC, suppressing the noises upon combustion and improving the combustion efficiency by controlling the amount of the mixture in accordance with the volume of the combustion chamber, by promoting evaporation of the fuel supplied to the combustion chamber in the form of mist and by mixing the vaporized fuel and air.

This object will be achieved by a combustion chamber and cylinder head arrangement comprising the features of claim 1.

A main combustion is formed in the top portion of the piston by recessing in the direction of the piston axis with the piston top surface as a reference plane. In the cylinder head, a swirl or ignition chamber is formed having a volume smaller than that of the main combustion chamber. The main combustion chamber and the ignition chamber are in communication with each other by a passage. This passage is formed in the cylinder head in such a way that the end port of the passage on the main combustion chamber side faces the main combustion chamber in the vicinity of the upper edge of the opening thereof. Further, in the passage a means for atomizing and supplying fuel into the main combustion chamber is provided with its fuel-in-jecting nozzle part protruding in the passage interior on the main combustion chamber side thereof, said fuel injection nozzle means being disposed within and fixed inside aforesaid cylinder head. The fuel injection nozzle means is constructed in such a way that it is capable of atomizing and then supplying the fuel by the fuel-injecting part into the swirl chamber through said passage, on the one hand, and into the main combustion chamber, on the other hand. The arrangement according to the invention has the advantage that the fuel stream into the main combustion chamber is independent from the dimension and the position of the passage connecting the main combustion chamber with the ignition chamber.

Due to this construction, the following effects can be realized.

In the last stage of the compression stroke, a swirl is generated in the main combustion chamber flowing in the circumferential direction thereof, while in the ignition chamber a swirl flows along the inner walls thereof. Futhermore, fuel is injected in the form of a mist into the ignition chamber as well as into the main combustion chamber from the fuel injection nozzle means

The fuel mist, supplied to the ignition chamber, is carried by the air that is forced thereinto and evaporates as it revolves therein carried by the swirl. That part of the fuel that has been vaporized is mixed with the air in the ignition chamber to become the mixture which is ignited and burned. Here, since the volume of the ignition chamber is smaller than that of the main combustion chamber, and since the mixture generated therein does not disperse into the main combustion chamber, a fuel-rich mixture is produced inside the ignition chamber.

Thus, even though a comparatively rapid combustion takes place in the ignition chamber as the flame and the heat energy created upon the rapid combustion enter the main combustion chamber through the passage, not only is there no increase in the combustion noise that accompanies fast rise of combustion pressure, but, owing to the raised combustion temperature, HC is also decreased.

When the piston approaches the top of the compression stroke, the fuel mist supplied from said fuel injection nozzle means into the main combustion chamber is evaporated by the heat of the compressed air in the main combustion chamber and by the heat from the chamber wall. Since formation of the mixture is further assisted by the swirl, the mixture that has thus been generated readily ignites and burns as said combusted gas flows in to lower the piston. The fuel supplied to the side wall of the main combustion chamber to form a fuel film thereat, vaporizes and burns gradually as the piston goes down.

Thus, a sluggish combustion is made possible, whereby an increase of output and thermal efficiency as well as combustion efficiency is realized while suppressing generation of HC, bluish white smokes and $NO_x$.

The invention will be further described with reference to the drawings in which

Fig. 1 is a schematic cross sectional view of a preferred embodiment of a combustion chamber of the internal combustion engine according to the present invention,

Fig. 2 is a top plan view of Fig. 1,

Fig. 3 is a detailed partial cross sectional view of an ignition chamber,

Fig. 4 is a schematic cross sectional view of another embodiment according to the present invention,

Fig. 5 A and Fig. 5 B are top views of main combustion chambers which have corner areas according to other embodiments of the present invention,

Fig. 6 A, B, and C are schematic views of main combustion chambers with shelves according to other embodiments of the present invention, and,

Fig. 7 through Fig. 10 are schematic drawings illustrating various prior art solutions.

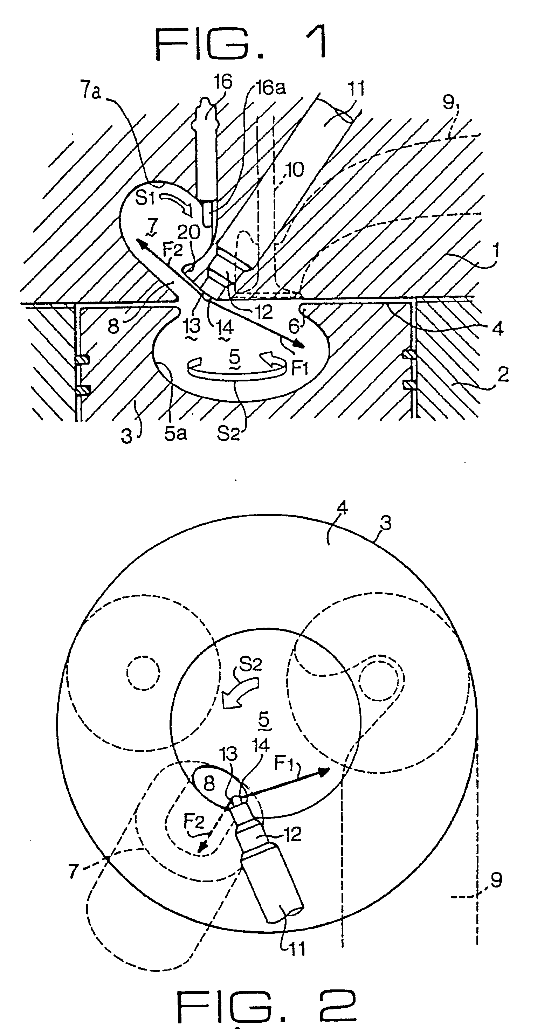

In Fig. 1, the numeral 1 denotes a cylinder head, numeral 2 a cylinder body and numeral 3 a piston. As shown therein, in the piston top 4 of the piston 3 a main combustion chamber 5 is formed, which is shaped by recessing deeply in the axial direction in the form of a spherical cavity with the piston top surface 4 as the reference plane in such a manner that the diameter of the opening is progressively enlarged forming a vertical section where an approximate circle of the main combustion chamber 5 profile is cut at the top. As a consequence thereof, a lip part 6 is formed protruding radially and inwardly along the opening periphery in the upper portion of the opening of the main combustion chamber 5.

In the cylinder head 1, a swirl or ignition chamber 7 is formed having a volume wich is smaller than that of the main combustion chamber 5. In the lower portion of the ignition chamber 7, a passage 8 is formed in such a way that it faces the main combustion chamber 5 in the vicinity of the lip part 6 thereof and guides the air into the ignition chamber 7. Here, the axis of the passage 8 is offset with respect to the center of the ignition chamber 7, the passage 8 being so connected to the ignition chamber 7 as to generate a swirl S1 along the inner wall 7a of the ignition chamber 7. Due to said offset, a shelf 20 is created at the entrance of the ignition chamber 7, or at the downstream side of the passage 8, to circle the air inside.

Inside the cylinder head 1, a helical swirl port 9 is formed, as shown in Figs. 1 and 2, so as to feed swirled air into said main combustion chamber 5. Said swirl port 9 is opened or closed by a suction valve 10 that moves freely up and down inside the cylinder head 1.

It is to be remembered that one purpose of the combustion chamber and cylinder head arrangement for an integral combustion engine according to the present invention is to ensure a high efficiency combustion with regard to output and fuel consumption while suppressing the generation of HC and the bluish white fumes for all operational conditions of the engine. For this purpose, a means for atomizing and suppliying fuel or fuel injection nozzle means 11 is contructed and disposed in relation to the main combustion chamber 5 and the ignition chamber 7 as follows.

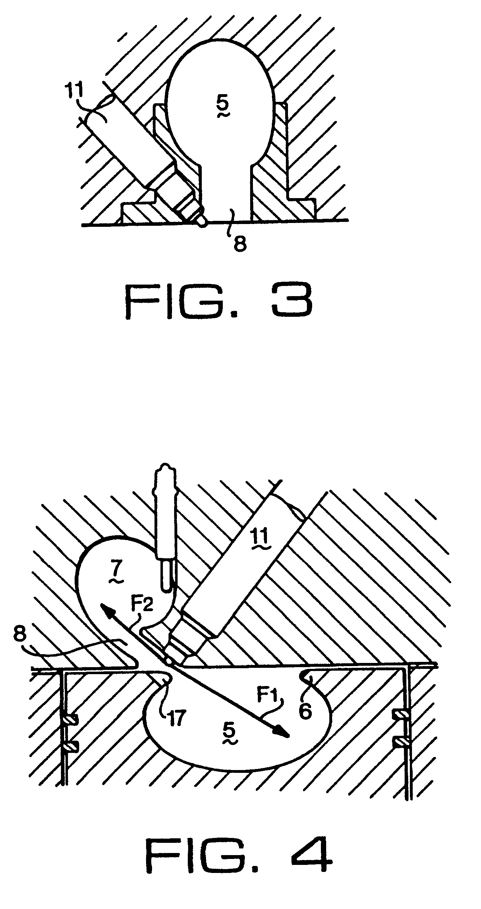

As shown in Fig. 1 or Fig. 3, the fuel injection nozzle means 11 is so constructed as to enclose within its nozzle body 12 a needle valve (not shown), which is capable of free vertical motion with respect to the valve seat (not shown) in the nozzle body 12, to open a nozzle hole (injector port 13) in the vicinity of said valve seat, to open a further nozzle (injector port 14), which is closed until the said needle valve acquires a predetermined lift value but is opened when said lift value is exceeded, at the tip of the nozzle body 12. Furthermore, the fuel injection nozzle means 11 is disposed within the cylinder head 1 as contained in a nozzle holder (not shown) in such a manner that the nozzle holes are found in the upstream side of the passage 8. Here, the injector port 13 faces the ignition chamber interior via the passage 8, whereas the injector port 14 generally faces the side wall 5a of the main combustion chamber 5, and in the particular case of this embodiment, is directed toward the direction of the swirl S2. Moreover, within the cylinder head 1, there is provided an ignition means 16, such as a glow plug, whose heating part 16a protudes into the ignition chamber 7. The ignition means 16 may be selected to fit to the fuel used ; for example, an ignition plug that is suited to low cetane number fuel oils or volatile fuel oils such as gasoline or alcohol may be employed.

The functions of the combusiton chamber and cylinder head arrangement of the present invention are explained with reference to the attached drawings.

During the starting-up of the engine, while the needle valve lift is in a very low speed range, the needle valve of the fuel injection nozzle means 11 is activated in the lifting direction in accordance with the fuel pressure in the nozzle body 12. As the needle valve is lifted from the valve seat, the injector port 13 is opened and the fuel mist F2 is injected from injector port 13 into the ignition chamber 7, wherein the fuel mist F2 revolves around being carried by the compressed air that is forced into the ignition chamber 7, and the fuel mist F2 is quickly vaporized by the heat of the hot compressed air and mixes therewith.

Therefore, by controlling the amount of the fuel to be injected from the injector port 13, a mixture of a fuel concentration appropriate for easy ignition and ready flame propagation, i.e., a mixture of proper air-fuel ratio, is formed within the ignition chamber 7 as the fuel mist F2 effectively mixes with the compressed air. The mixture of a proper composition thus formed is able to be burned quickly even during the cold starting of the engine, when assisted, if necessary, by an ignition means 16 such as a glow plug or an ignition plug.

Under medium or heavy load conditions, when the lift value of the needle valve exceeds the predetermined value, the injector port 14 is also opened, injecting the fuel mist F1 into the main combustion chamber 5. A portion of the fuel mist F1 thus injected impinges on the side wall 5a of the main combustion chamber 5 to be scattered away, while the rest forms a fuel film on the side wall 5a that flows therealong in the direction of the swirl S2, widening as it flows. Scattered fuel evaporates from its outer surface due to the heat from the wall. Consequentially, a mixture of a proper air-fuel ratio is also formed in the main combustion chamber 5. This mixture is ignited instantly by the flame which has been generated in the ignition chamber 7 by combustion and has flowed out into the main combustion chamber 5 through the passage 8, thereby performing combustion without misfiring and completing combustion as the piston 3 is lowered.

Thus, since the stable combustion of the fuel is carried out for all the load conditions including starting-up of the engine, and since the combustion noises that are generated by abnormal combustion (due to an ignition lag or the like) and the maximum combustion temperature are decreased, excellent combustion for increasing output, thermal efficiency and fuel economy is also improved while suppressing generation of HC, bluish white smokes and $NO_x$. Also, since the formation of the main combustion chamber 5 and the ignition chamber 7 with intervening passage 8 effectively controls the movement of the mixture after fuel injection, it develops the function of maintaining a correct air-fuel ratio by preventing the injected fuel from dispersing into the main combustion chamber 5 from the ignition chamber 7.

Moreover, by making the injector port 13, which faces the ignition chamber 7, an auxiliary injector port having a very small diameter, thus making the diameters of the fuel mist particles created by the injector port 13 very small, evaporation and combustion can be promoted further. This is particularly effective for improving the ease of cold starting-up and stable combustion.

The injector port 14, which faces the main combustion chamber 5, must not necessarily be oriented in the direction of the swirl S2, but may be oriented in the counter flow direction so as to promote the evaporation of the fuel. A plurality of injector ports 14 may also be provided each at a predetermined injection angle. In this case, the injection directions are preferably not toward the center of the main combustion chamber 5. This prevents the abnormal combustion occurring at the combustion chamber center and suppresses the generation of $NO_x$ which arises from the convergence of the swirl S2 on the center of the combustion chamber 5 and the hot air created there.

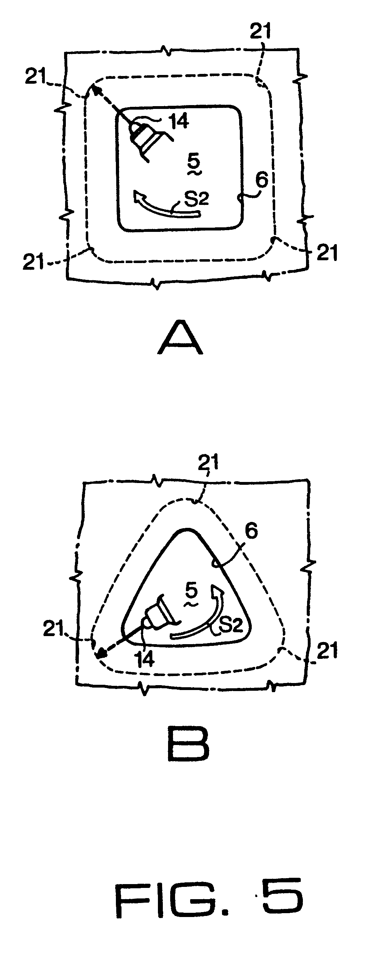

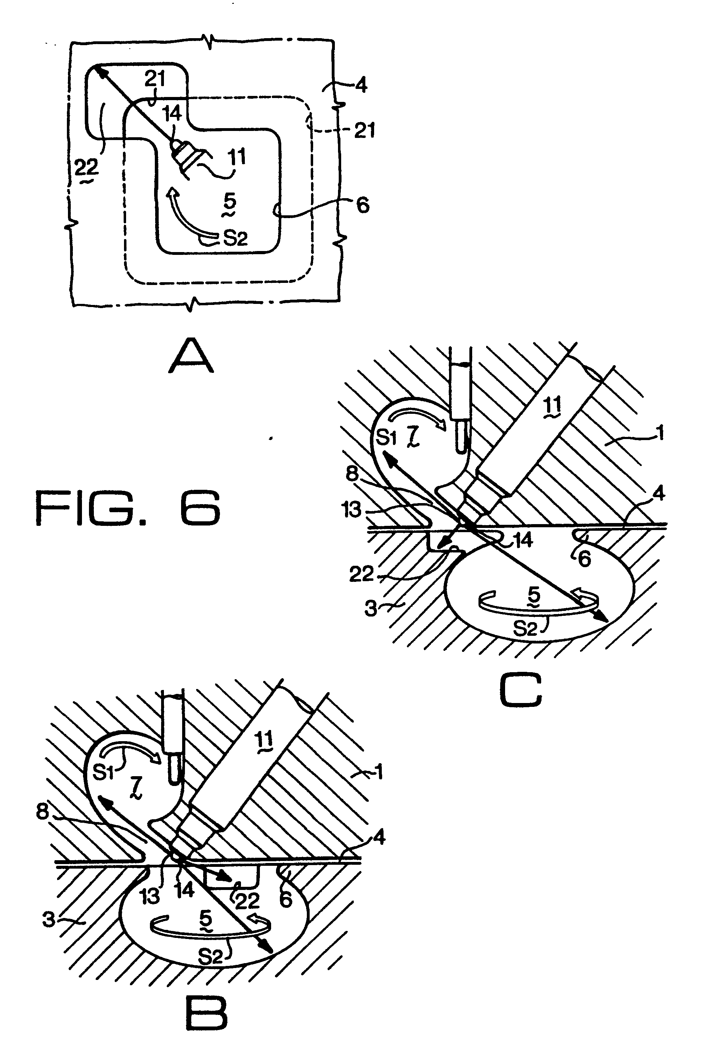

Finally, in explaining embodiments of the combustion chamber and cylinder head arrangement according to the present invention, the form of the main combustion chamber 5 thereof has been described as circular in the horizontal section, but polygonal forms such as squares or triangles, which have corner areas 21, are also permissible as shown in Fig.5 A and B. In these embodiments, the number of the injector ports 14 of the fuel injection nozzle means 11 is more than one, and at least one of them is directed toward one of the corner areas 21. Fig. 6 A, B or C shows the embodiment which contains a shelf 22 at the upper part of the opening of the main combustion chamber 5.

As illustrated in Fig. 6 A, at the top of one of the corner areas 21 of the main combustion chamber 5, a shelf 22 is provided by recessing outwardly therefrom. Said shelf 22 is contiguous with the main combustion chamber 5 and has an opening as shown in Fig. 6 B.

One of the injector ports 14 of the fuel injection means 11 is directed toward the shelf 22 for supplying the fuel in an atomized state. Although the shelf 22 can be located anywhere in the wall, its location should be decided with regard to the penetrability of the fuel from the injector ports 14 in such a manner that a fuel-rich mixture is produced inside the shelf 22.

Further, in order to effectively improve the propagation of the flame and the heat energy through the passage 8, as shown in Fig. 6 C, the shelf 22 is provided so as to face the passage 8 at the end of the compression stroke. In this particular case, one of the injector ports 14, oriented to the self, has a small design with regard to the atomization of the fuel. More injector ports or nozzle holes are provided in these embodiments than previously mentioned.

As described above, a fuel-rich mixture is locally formed by providing said corner areas 21 and shelves 22, which promote stable combustion. Similar effects may by obtained in the ignition chamber 7 by forming a shelf in the inner wall thereof so as to assist in the formation of the swirl.

Furthermore, as shown in Fig. 4, a notch groove 17 may be formed in the piston top 4 so as to communicate with the main combustion chamber 5, and the inlet port of the passage 8 may be located above the notch groove 17.

As explained heretofore, the combustion chamber and cylinder head arrangement for internal combustion engines of the present invention provides effective control of the air-fuel ratio to the proper value by improving the mixture of fuel and air as they are supplied to the main combustion chamber and to the auxiliary chamber, thus achieving stabilized starting-up performance, stable evaporation of fuel and slack combustion.

## Claims

1. A combustion chamber and cylinder head arrangement for an internal combustion engine comprising :

a main combustion chamber (5) defined by a first recess in the top (4) of a piston (3), the opening diameter of which is progressively enlarged in downward direction,

an ignition chamber (7) defined by a second recess formed in the cylinder head (1),

a passage (8) formed in the cylinder head (1) for connecting the main combustion chamber (5) with the ignition chamber (7) between its upstream and downstream sides, and

means (11) for atomizing and supplying fuel into the main combustion chamber (5) and the ignition chamber (7) via at least two injector ports (13,14), the first (13) of the injector ports (13,14) injecting fuel into said ignition chamber (7), whereas the second (14) injects fuel into said main combustion chamber (5) directed toward the inner side wall (5a) of the main combustion chamber (5) forming a swirl (S2) therein which flows in a circumferential direction thereof, **characterized** in that the passage (8) enters the ignition chamber (7) tangentially, said fuel supply means (11) is provided at the main combustion chamber end of said passage (8) facing the interior of the passage, and

the first injector port (13) is directed so as to inject the fuel into said ignition chamber (7) along its inner wall (7a) in the form of a swirl (S1).

2. The arrangement according to claim 1, wherein the main combustion chamber (5) is formed with its opening diameter progressively enlarged downwards in the axial direction, and a lip part (6) is formed along the periphery of the opening of said main combustion chamber (5) protruding radially and inwardly.

3. The arrangement according to claim 1 or 2, wherein the ignition chamber (7) is formed so as to create a shelf part (20) in the lower inner wall thereof as a means for creating a swirl (S1) that flows along the inner wall of said ignition chamber (7) .

4 . The arrangement according to any one of claims 1 to 3, wherein the passage (8) that connects the main combustion chamber (5) with the ignition chamber (7) is so constructed as to have its main combustion chamber side port face the main combustion chamber (5) in the vicinity of the upper edge of the opening thereof .

5. The arrangement according to any one of claims 1 to 4, wherein the fuel injector ports (13, 14) include a nozzle hole (13) that atomizes and injects the fuel into the ignition chamber (7) through the passage (8) and a nozzle hole (14) that atomizes and injects the fuel into the main combustion chamber (5)

6. The arrangement according to claim 4, wherein said fuel supply means (11) is directed so as to inject the fuel into said ignition chamber (7), toward the inner wall of the main combustion chamber (5) and also in the same direction as the swirl (S1) flows.

7. The arrangement according to any one of the foregoing claims, wherein the ignition chamber (7) is formed with a volume smaller than that of the main combustion chamber (5)

## Ansprüche

1. Verbrennungskammer- und Zylinderkopfanordnung für eine Brennkraftmaschine, umfassend : eine durch eine erste Vertiefung in der Oberseite (4) eines Kolbens (3) gebildete Hauptbrennkammer (5), deren Öffnungsdurchmesser nach unten progressiv zunimmt, eine durch eine zweite Vertiefung in dem Zylinderkopf (1) gebildete Zündkammer (7), einen in dem Zylinderkopf (1) gebildeten Kanal (8) zur Verbindung der Hauptbrennkammer (5) mit der Zündkammer (7) zwischen seinem in Strömungsrichtung vorderen und hinteren Ende, und Mittel (11) zum Zerstäuben und Zuführen von Kraftstoff in die Hauptbrennkammer (5) und die Zündkammer (7) über mindestens zwei Einspritzöffnungen (13, 14), deren erste (13) den Kraftstoff in die Zündkammer (7) und deren zweite (14) den Kraftstoff in die Hauptbrennkammer (5) auf deren innere Seitenwand (5a) gerichtet einspritzt, wobei darin ein Wirbel (S2) in Umfangsrichtung erzeugt wird, dadurch **gekennzeichnet**, daß der Kanal (8) in die Zündkammer (7) tangential einmündet, daß die Kraftstoffzuführungsmittel (11) an dem der Hauptbrennkammer zugewandten Ende des Kanals (8) dessen Innerem zugewandt sind, und daß die erste Einspritzöffnung (13) so gerichtet ist, daß der Kraftstoff in die Zündkammer (7) längs deren Innenwand (7a) in Form eines Wirbels (S1) eingespritzt wird.

2. Anordnung nach Anspruch 1, bei der die Hauptbrennkammer (5) einen nach unten in axialer Richtung progressiv zunehmenden Öffnungsdurchmesser hat, und daß eine vorstehende Kante (6) längs des Öffnungsumfangs der Hauptbrennkammer (5) ausgebildet ist, die radial nach innen steht.

3. Anordnung nach Anspruch 1 oder 2, bei der die Zündkammer (7) so ausgebildet ist, daß sie in ihrer unteren Innenwand einen Flächenteil (20) zur Erzeugung eines Wirbels (S1) hat, der längs der Innenwand der Zündkammer (7) strömt.

4. Anordnung nach einem der Ansprüche 1 bis 3, bei der der Kanal (8), der die Hauptbrennkammer (5) mit der Zündkammer (7) verbindet, so konstruiert ist, daß seine der Hauptbrennkammer (5) zugewandte Öffnung der Hauptbrennkammer (5) im Bereich ihrer oberen Öffnungskante gegenübersteht.

5. Anordnung nach einem der Ansprüche 1 bis 4, bei der die Einspritzöffnungen (13, 14) eine Düsenöffnung (13), die den Kraftstoff zerstäubt und in die Zündkammer (7) durch den Kanal (8) einspritzt, und eine Düsenöffnung (14) umfassen, die den Kraftstoff zerstäubt und in die Hauptbrennkammer (5) einspritzt.

6. Anordnung nach Anspruch 4, bei der die Kraftstoffzuführungsmittel (11) so ausgerichtet sind, daß der Kraftstoff in die Zündkammer (7) zur Innenwand der Hauptbrennkammer (5) hin und auch in derselben Richtung wie der Wirbel (S1) eingespritzt wird.

7. Anordnung nach einem der vorhergehenden Ansprüche, bei der die Zündkammer (7) ein kleineres Volumen als die Hauptbrennkammer (5) hat.

## Revendications

1. Disposition de chambre de combustion et de culasse pour un moteur à combustion interne comportant :
   – une chambre principale de combustion (5) définie par un premier évidement au sommet (4) d'un piston (3) dont le diamètre d'ouverture s'élargit progressivement vers le bas,
   – une chambre d'allumage (7) définie par un second évidement formé, dans la culasse (1),
   – un passage (8) formé dans la culasse (1) reliant la chambre principale de combustion (5) et la chambre d'allumage (7) entre ses côtés amont et aval et
   – des moyens (11) pour pulvériser et admettre du carburant dans la chambre principale de combustion (5) et dans la chambre d'allumage (7) via au moins deux orifices d'injection (13,14), le premier (13) des orifices d'injection (13, 14) injectant du carburant dans ladite chambre d'allumage (7) alors que le second (14) injecte du carburant dans la chambre principale de combustion (5) dirigé vers la paroi interne latérale (5a) de la chambre principale de combustion (5) en formant un tourbillon (S2) à l'intérieur de celle-ci qui circule dans une direction circonférentielle, caractérisé en ce que le passage (8) pénètre tangentiellement dans la chambre d'allumage (7), les moyens d'admission (11) du carburant étant disposés à l'extrémité du passage (8) du côté de la chambre principale de combustion en regard de l'intérieur de ce passage et le premier orifice d'injection (13) est dirigé de manière à injecter le carburant dans la chambre d'allumage (7) le long de sa paroi interne en forme d'un tourbillon (S1).

2. Disposition selon la revendication 1 dans laquelle la chambre principale de combustion (5) est formée pour avoir son diamètre d'ouverture s'élargissant vers le bas dans la direction axiale et une partie en forme de lèvre (6) s'étend le long de la périphérie de l'ouverture de la chambre principale de combustion (5) en faisant saillie radialement vers l'intérieur.

3. Disposition selon la revendication 1 ou la revendication 2 dans laquelle la chambre (7) d'allumage est formée de manière qu'il soit créé une partie en rebord (20) dans sa paroi interne inférieure en tant que moyen pour créer un tourbillon (S1) qui circule le long de la paroi intérieure de cette chambre (7) d'allumage

4. Disposition selon l'une quelconque des revendications 1 à 3 dans laquelle le passage (8) qui relie la chambre principale de combustion (5) et la chambre (7) d'allumage est réalisé de manière à avoir son orifice du côté de la chambre principale de combustion (5) au voisinage du bord supérieur de celle-ci.

5. Dispositif selon l'une quelconque des revendications 1 à 4 dans laquelle les orifices d'injecteur de carburant (13,14) comportent un orifice de nez (13) qui pulvérise et injecte du carburant dans la chambre d'allumage (7) par le passage (8) et un orifice de nez (14) qui pulvérise et injecte du carburant dans la chambre principale de combustion (5).

6. Disposition selon la revendication 4, dans laquelle le moyen d'admission (11) est dirigé de manière à injecter le carburant dans la chambre d'allumage (7), en direction de la paroi interne de la chambre principale (5) de combustion et également dans la direction de circulation du tourbillon (S1).

7. Disposition selon l'une quelconque des revendications précédentes dans laquelle la chambre d'allumage (7) est de volume plus petit que celui de la chambre principale de combustion (5).

# FIG. 1

# FIG. 2

FIG. 3

FIG. 4

A

B

FIG. 5

FIG. 6

FIG. 7

FIG. 8

FIG. 9

FIG.10